# EUROPEAN PATENT APPLICATION

(11) **EP 0 703 271 A1**
(43) Date of publication of application: **27.03.1996**
(21) Application number: 94202736.8
(22) Date of filing: 22.09.1994
(51) Int. Cl.: C08L 23/08

(54) **Flexible nonhalogen containing thermoplastic polyolefin compositions**

(71) Applicant: DU PONT DE NEMOURS INTERNATIONAL S.A., CH-1218 Le Grand-Saconnex (Genève) (CH)
(72) Inventor: Garcia Duran, Juan-Antonio, CH-1208 Geneva (CH); Rolland, Loic Pierre, F-01220 Divonne Les Bains (FR)

(57) **Abstract**

Nonhalogen-Containing Thermoplastic Polyolefin blends are provided which are flexible and are particularly useful in replacing polyvinyl chloride sheeting used as roofing liners. The blends comprise, in general, (1) ethylene vinyl acetate containing and (2) very low density polyethylene having a specific gravity less than 0.920, and optionally contains (3) ethylene vinyl acetate carbon monoxide terpolymer and (4) a compatibilizer blend comprising (i) a polar olefinic polymer and (ii) a non-polar olefinic polymer; all of which are chlorine free.

## Description

### Background of the Invention

### Field of Invention:

This invention relates to polyolefin compositions and more particularly to such compositions which are flexible and to shaped articles made from them.

### Background Discussion:

Polyvinyl chloride (PVC) sheets have been on the market for many years and have become the standard roof liner material in the housing industry. PVC sheets are characterized as being flexible over a variable temperature range, heat-sealable, and oil-resistant. However, with the trend toward a chlorine-free environment, there is a need for a PVC sheeting alternative. Ethylene-propylene-diamine-methylene (EPDM) rubbers are alternatives, but these are difficult to seal. Thus, there is a need for roof and other types of liner sheets which are thermoplastic and heat-sealable, halogen-free and flexible.

### Summary of the Invention

According to the present invention there is provided a flexible, nonhalogen-containing polymer composition which comprises a blend of:
(1) ethylene vinyl acetate containing 30-90% by weight ethylene and 10-70% by weight vinyl acetate; and
(2) very low density polyethylene having a specific gravity less than 0.920.

The composition according to the invention may further contain:
(3) ethylene vinyl acetate carbon monoxide terpolymer containing 30-90% by weight ethylene, 10-70% by weight vinyl acetate and 1-20% by weight carbon monoxide; and
(4) a compatibilizer blend comprising
   (i) a polar olefinic polymer containing 15 to 60% by weight ethylene vinyl acetate; and
   (ii) a non-polar olefinic polymer,
wherein one of components (4)(i) and (4)(ii) contains 0.01 to 10% by weight of glycidyl acrylate or methacrylate or a derivative thereof, and the other of components (4)(i) and (4)(ii) contains 0.01 to 10% by weight of a carboxylic acid or a derivative thereof.

Common additives which may be included in the composition of the present invention include aluminum trihydrate (for flame retardancy), antioxidants, titanium dioxide (for UV resistance and to give a white color to the product) and UV stabilizers.

### Detailed Description of the Invention

The present invention relates to flexible, non-halogen containing thermoplastic polymer blends which are useful in sheet form, and particularly as roofing liners. These blends generally are formed by combining an ethylene vinyl acetate (EVA) copolymer and a very low density polyethylene (VLDPE) having a specific gravity below 0.920, both of which are chlorine free.

The blend may further contain an ethylene vinyl acetate carbon monoxyde (EVACO) terpolymer. Compatibilizing agents can be added in order to improve the properties of the blend.

Polymer blends according to the present invention can be formed into sheets which have many properties comparable to polyvinyl chloride (PVC) containing blends, but with better elongation and being free from chlorine.

Unless otherwise stated, percentage weight ranges for each of the components in the composition of the present invention are calculated exclusive of any additives which may be present.

The EVA copolymer (component (1)) useful in this invention preferably contains 30-90% by weight of ethylene and 10-70% by weight of vinyl acetate, more preferably 55-75 % by weight of ethylene and 25-45 % by weight of vinyl acetate. In general, these EVA's have a melt flow index (MFI) in the range of 0.05-100 g/10 min., preferably less than 50 g/10min. as determined by ASTM D-1238 (measured at 2,16 kg and 190 °C) and are well-known in the art.

Component (1) preferably comprises 25-65% by weight of the composition of the present invention, more preferably 30-50% by weight.

The VLDPE (component (2)) is used herein to mean polyethylene having a density below about 0.920 g/cc and includes linear polyethylene as well as copolymers of ethylene which are thermoplastic resins, but non-polar. The term VLDPE includes copolymers of ethylene and other alpha-olefins such as 1-butene, 1-hexene, and 1-octene. The processes for producing VLDPE are well known in the art and commercial grades of this polyolefin are available.

Component (2) preferably comprises 25-65% by weight of the composition of the present invention, more preferably 30-40% by weight.

The EVACO terpolymer (component (3)) useful in this invention preferably contains 30-90% by weight of ethylene, 10-70% by weight of vinyl acetate and 1-20% by weight of carbon monoxide, more preferably 55-65% by weight of ethylene and 20-30% by weight of vinyl acetate and 5-15% by weight carbon monoxide. In general, these EVACO's have a melt flow index (MFI) in the range of 1-50 g/10 min., preferably in the range of 10-40 g/10min. as determined by ASTM D-1238 (measured at 2,16 kg and 190 °C) and are well-known in the art.

When present, Component (3) preferably comprises 20-40% by weight of the composition of the present invention, more preferably 30-35% by weight.

The compatibilizing polymer (4)(i) in the compatibilizer blend (component (4)) is a relatively polar olefin polymer containing 15-60% by weight vinyl acetate, more preferably 25-40% by weight vinyl acetate, and optionally containing 1-20% by weight of carbon monoxide; compatibilizing polymer (4)(ii)) is a substantially non-polar olefin polymer containing less than 15% by weight of a copolymerized polar monomer, more preferably containing less than 5% by weight of a copolymerized polar monomer.

One of components (4)(i) and (4)(ii) will contain 0.01-10% by weight, preferably 0.5-5% by weight, of reactive groups selected from glycidyl acrylate or methacrylate or a derivative thereof, and the other of components (4)(i) and (4)(ii) will contain 0.01-10% by weight, preferably 0.5-5% by weight, of reactive groups selected from a carboxylic acid or a derivative thereof (such as an anhydride).

This olefin backbone polymer of components (4)(i) and (4)(ii) can be functionalized by grafting the desired reactive group to the polymer by known processes. The grafting of the polyolefin can be carried out in the melt state, in solution or in suspension as described in the state-of-the-art literature. While the melt viscosity of the modified polyolefin is not restricted, the most effective compatibilization with modified polyolefin is found if the melt index, measured at 2.16 kg and 190°C is between 1 to 50 g/10 min. Glycidyl methacrylate and maleic anhydride are the preferred functionalizing agents. Such modified polyolefins can be prepared as described, for example, in published European Patent Application Nos. 370,735 and 370,736.

The compatibilizer blend will contain 20-80% by weight component (4)(i) and 80-20% by weight component (4)(ii), more preferably 25-35% by weight component (4)(i) and 65-75% by weight component (4)(ii).

When present, component (4) preferably comprises 0.5-10% by weight of the composition of the present invention, more preferably 3-5% by weight.

In addition to its polymer components, the composition of the present invention can be blended with common additives such as reinforcing and non-reinforcing fillers, flame retardant fillers such as aluminium trihydrate, antioxidants, UV stabilizers, lubricants (e.g., oleamide), antiblocking agents, antistatic agents, waxes, coupling agents for fillers, pigments, titanium dioxide, talc and other processing aids known in the polymer compounding art. The pigments and other additives may comprise up to about 50 weight percent of the total composition based on polymer components plus additives (the polymer components being present in amounts with respect to each other in the proportions previously specified); preferably pigments and fillers comprise above about 0 to about 30 weight percent of the total composition.

The blends of the invention can be prepared by mixing the polymeric ingredients and optional additives by use of conventional masticating equipment, for example, a rubber mill, Brabender Mixer, Banbury Mixer, Buss-ko kneader, Farrel continuous mixer or twin screw continuous mixer. Mixing times should be sufficient to obtain homogeneous blends. Satisfactory mixing times depend upon the types of polymers and upon the type and amount of compatibilizer. Typically, mixing times of about 5 minutes are satisfactory. If the polymer blend is obviously non-homogeneous, additional mixing is required.

The invention can be further understood by the following examples in which parts and percentages are by weight or in parts per hundred rubber (phr) and temperatures are in degrees Celsius.

### Examples 1-4

### Legend

MFI = melt flow index
EVA - ethylene vinyl acetate
VLDPE = very low density polyethylene
MAH = maleic anhydride
EGMA = ethylene glycidyl methacrylate
EVACO = ethylene vinyl acetate carbon monoxide

### Procedure

A blend is prepared by melt-compounding several of the following components in the proportions set forth in Table 1 below.
- EVA (64% ethylene and 36% vinyl acetate) having a MFI (190°/2.16 kg) of 0.8
- EVA (72% ethylene and 28% vinyl acetate) having a MFI (190°/2.16 kg) of 3.0
- EVA (66% ethylene and 33% vinyl acetate) having a MFI (190°/2.16 kg) of 18, grafted with 1% MAH
- VLDPE having a density of 0.911 g/cc and a MFI (190°/2.16 kg) of 2.2
- VLDPE having a density of 0.887 g/cc and a MFI (190°/2.16 kg) of 1.5
- EVACO (62.5% ethylene, 28.5% vinyl acetate and 9% carbon monoxide) having a MFI (190°/2.16 kg) of 35
- EGMA (1.8 % glycidyl methacrylate having a MFI (280°/2.16 kg) of 5
- titanium dioxide
- aluminium trihydrate
- UV stabilizers (blend of 50% by weight TINUVIN 622 LD (an oligomeric, sterically hindered amine stabilizer available from Ciba; and 50% by weight TINUVIN 328 (a benzotriazole type stabilizer available from Ciba))
- antioxidant - phenolic type available under the name IRGANOX 1010 from Ciba
Melt compounding is carried out on a two roll mill with batches from 100 grams at 130-150°C for ca. 5 minutes. The milled product is formed into a testing plaque in a hydraulic press at 130-150°C for 5 minutes. Afterwards stress-strain testing (ASTM D-638) and Shore A hardness (DIN 53505) are carried out. Results are shown in Table 1.

**Table 1**

| **Example numbers** | **1** | **2** | **3** | **4** |
|---|---|---|---|---|
| EVA (36.3% VA) | 37.9 | - | 37.9 | - |
| EVA (28% VA) | - | 25.2 | - | 25.2 |
| EVACO (28.5% VA, 9% CO) | - | 25.0 | - | 25.0 |
| VLDPE (0.911 g/cc) | 16.2 | 11.2 | 16.2 | 11.2 |
| VLDPE (0.887 g/cc) | 20.0 | 13.6 | 23.8 | 16.5 |
| EGMA (1.8% GMA) | 2.8 | 1.9 | - | - |
| EVA + 1% MAH | 1.0 | 1.0 | - | - |
| Titanium dioxide | 1.0 | 1.0 | 1.0 | 1.0 |
| Aluminium trihydrate | 20.0 | 20.0 | 20.0 | 20.0 |
| UV stabilizer | 0.6 | 0.6 | 0.6 | 0.6 |
| Antioxidant | 0.5 | 0.5 | 0.5 | 0.5 |
| Tensile strength (MPa) | 16.3 | 13.5 | 15.9 | 13.5 |
| Tensile elongation (%) | 840 | 750 | 850 | 750 |
| Modulus at 100% (Mpa) | 3.9 | 3.9 | 3.9 | 3.3 |
| Shore A hardness | 78 | 78 | 80 | 80 |
| Specific gravity (g/cc) | 1.066 | 1.086 | 1.071 | 1.094 |

One can see that the formulations containing compatibilizers show a particularly lower hardness and specific gravity. For roofing membranes, this brings a significant benefit.

Moreover, it can be shown that flame retardancy and chemical resistance are improved in formulations containing compatibilizers in comparison to those which do not contain compatibilizers.

## Claims

1. A flexible, nonhalogen-containing polymer composition comprising a blend of
(1) ethylene vinyl acetate containing 30-90% by weight ethylene and 10-70% by weight vinyl acetate; and
(2) very low density polyethylene having a specific gravity less than 0.920.

2. A blend according to claim 1 wherein component (1) comprises 35-65 % by weight of the blend and component (2) comprises 65-35 % by weight of the blend.

3. A blend according to claim 1 further comprising
(3) ethylene vinyl acetate carbon monoxide terpolymer containing 30-90% by weight ethylene, 10-70% by weight vinyl acetate and 1-20% by weight carbon monoxide.

4. A blend according to claim 3 wherein component (1) comprises 25-65% by weight of the blend, component (2) comprises 25-65% by weight of the blend and component (3) comprises 20-40% by weight of the blend.

5. A blend according to any one of the preceding claims further comprising
(4) a compatibilizer blend comprising
(i) a polar olefinic polymer containing 15 to 60% by weight ethylene vinyl acetate; and
(ii) a non-polar olefinic polymer
wherein one of components (4)(i) and (4)(ii) contains 0.01 to 10% by weight of glycidyl acrylate or methacrylate or a derivative thereof, and the other of components (4)(i) and (4)(ii) contains 0.01 to 10% by weight of a carboxylic acid or a derivative thereof.

6. A blend according to claim 5 wherein component (4) comprises 0.5-10% by weight of the blend.

7. A shaped article formed from a blend according to any one of the preceding claims.
